# EUROPÄISCHE PATENTSCHRIFT

(11) **EP 2 113 443 B1**
(45) Veröffentlichungstag und Bekanntmachung des Hinweises auf die Patenterteilung: **01.11.2017**
(21) Anmeldenummer: 09100199.0
(22) Anmeldetag: 25.03.2009
(51) Int. Cl.: B62D 5/04

(54) **Lenksystem in einem Fahrzeug**
Steering system in a vehicle
Système de direction dans un véhicule

(30) Priorität: 30.04.2008 DE 102008001503
(43) Veröffentlichungstag der Anmeldung: 04.11.2009
(73) Patentinhaber: ROBERT BOSCH GMBH, 70442 Stuttgart (DE)
(72) Erfinder: Voigtlaender, Klaus, 73117, Wangen (DE); Kimmich, Peter, 71101, Schoenaich (DE)

(56) Entgegenhaltungen:
- DE-A1- 10 127 169
- DE-A1- 10 260 261
- DE-A1-102005 055 171
- DE-U1-202004 003 949
- JP-A- 2003 118 601
- US-A1- 2003 173 920

## Beschreibung

Die Erfindung bezieht sich auf ein Lenksystem in einem Fahrzeug nach dem Oberbegriff des Anspruches 1.

### Stand der Technik

Aus der JP 2003118601 A ist ein Lenksystem für ein Fahrzeug bekannt, das eine Lenkwelle umfasst, über die ein vom Fahrer vorgegebener Lenkradwinkel in einen Radlenkwinkel an den lenkbaren Rädern des Fahrzeuges umgesetzt wird. Hierzu ist die Lenkwelle üblicherweise über ein Lenkgetriebe mit einem Lenkgestänge verbunden, an das die lenkbaren Räder gekoppelt sind. Zur Lenkkraftunterstützung ist ein elektrischer Servomotor vorgesehen, dessen Funktion über ein Steuergerät geregelt wird. Der elektrische Servomotor befindet sich an der Lenkwelle, so dass bei Betätigung des Servomotors das unterstützende Moment unmittelbar in die Lenkwelle eingeleitet wird. Das Steuergerät ist in einem separaten Gehäuse aufgenommen und befindet sich direkt neben dem Servomotor bzw. der Lenkwelle.

Auch die DE 101 27 169 A1 und die DE 102 60 261 A1 offenbaren Lenksysteme für Fahrzeuge mit einem orthogonal zur Lenkwelle angeordneten elektrischen Servomotor zur Lenkunterstützung.

Bei derartigen Lenksystemen ist aufgrund des eingeschränkten Bauraumes auf eine kompakte Ausführung ohne Einschränkung der Funktionsweise zu achten. Temperatureinflüsse und Feuchtigkeit dürfen auch über einen langen Betriebszeitraum die Funktionalität nicht beeinträchtigen.

Die DE 10 2005 055 171 A1 zeigt ein Lenksystem für ein Fahrzeug mit einem elektrischen Servomotor, dessen Motorachse orthogonal und mit seitlichem Abstand zur Achse der Lenkwelle verläuft. Die Steuerung des Servomotors erfolgt über eine Steuereinheit, die eine Ausnehmung aufweist, durch die die Motorwelle hindurchgeführt ist. Die Steuereinheit ist in einem Stromnetzkartengehäuse aufgenommen, das auch einen Kühlkörper beherbergt, welcher sich neben dem Servomotor befindet.

Die US 2003/0173920 A1 offenbart ein Lenksystem mit elektrischem Servomotor, wobei an das Motorgehäuse seitlich ein weiteres Gehäuse mit Platinen zur Steuerung des Servomotors aufgenommen sind. Die Platinen erstrecken sich parallel zur Motorlängsachse.

Die DE 20 200 003 949 U1 zeigt eine winklige Positionierung von zwei parallel angeordneten elektrischen Servomotoren zur Lenkunterstützung in einem Lenksystem, wobei die Motorachsen der Servomotoren unter einem Winkel zur Lenkwelle angeordnet sind. Die beiden Servomotoren weisen eine gemeinsame Steuereinheit auf, die sich parallel zu den Motorlängsachsen erstreckt.

### Offenbarung der Erfindung

Der Erfindung liegt die Aufgabe zugrunde, mit einfachen Maßnahmen ein klein bauendes, robustes Lenksystem in einem Fahrzeug darzustellen, das mit einem Servomotor zur Lenkkraftunterstützung ausgestattet ist.

Diese Aufgabe wird erfindungsgemäß mit den Merkmalen des Anspruches 1 gelöst. Die Unteransprüche geben zweckmäßige Weiterbildungen an.

Bei dem erfindungsgemäßen Lenksystem, welches in Kraftfahrzeugen eingesetzt wird, wird über eine Lenkwelle ein vom Fahrer vorgegebener Lenkradwinkel auf die lenkbaren Räder des Fahrzeuges übertragen, wofür in der Regel ein Lenkgetriebe und ein Lenkgestänge vorgesehen ist, wobei die Lenkwellenbewegung über das Lenkgetriebe in eine Stellbewegung des Gestänges umgesetzt wird. Des Weiteren ist zur Lenkunterstützung ein elektrischer Servomotor vorgesehen, der zur Einleitung eines unterstützenden Servomoments mit der Lenkwelle gekoppelt und dem eine Steuereinheit zugeordnet ist, welche die Steuerung bzw. Regelung des Servomotors in Abhängigkeit des aktuellen Fahrzustands übernimmt. Der Servomotor, die Steuereinheit sowie ein zur Kühlung von Servomotor bzw. Steuereinheit dienender Kühlabschnitt sind in einem Servogehäuse angeordnet, das mit einem Lenkwellengehäuse verbunden ist, in welchem die Lenkwelle drehbar aufgenommen ist.

Das Servogehäuse als gemeinsames Gehäuse für Servomotor, Steuereinheit sowie Kühlabschnitt erlaubt eine kompakte Ausführung der Lenkkraftunterstützungseinheit, die sich zudem durch Temperatur- und Feuchtigkeitsbeständigkeit auszeichnet. Im Unterschied zu Lösungen aus dem Stand der Technik wird eine Integration von verschiedenen Bauteilen in das Servogehäuse erreicht, dementsprechend wird eine kompakte und beständige Ausführung erzielt. Ein weiterer Vorteil liegt in der unmittelbaren Anbindung der Steuereinheit an den Servomotor, wodurch lange und störungsanfällige Kabelverbindungen entfallen.

Die Kombination mit dem Kühlabschnitt unterstützt ebenfalls die kompakte Bauweise. Außerdem wird eine effektive Ableitung der im Betrieb entstehenden Wärmeentwicklung erreicht, ohne dass hierfür eine separat ausgebildete Kühleinheit erforderlich ist. Der Kühlabschnitt ist insbesondere als eine Wandung des Servogehäuses ausgebildet und funktioniert in passiver Weise durch Wärmeabstrahlung bzw. -leitung und ohne zwingende Notwendigkeit von Kühlflüssigkeit. Gegebenenfalls kann der Kühlabschnitt aber auch Bestandteil eines Kühlers mit zirkulierender Kühlflüssigkeit sein.

Über die Anbindung des Servogehäuses an das Lenkwellengehäuse wird eine weitere bauliche Vereinfachung erreicht. Außerdem wird die Wärmeableitung über den Kontakt zwischen Servo- und Lenkwellengehäuse unterstützt.

Gemäß einer bevorzugten Ausführung ist das Servogehäuse mehrteilig aufgebaut, wobei die Gehäuseteile in montierter Position zu einem gemeinsamen Gehäuse zusammengesetzt sind, so dass eine abgeschlossene, bauliche Einheit erreicht wird. Beispielsweise ist das die Steuereinheit aufnehmende Gehäuseteil im Hinblick auf seine Dimensionierungen an das den Servomotor aufnehmende Gehäuseteil angepasst, so dass beide Gehäuseteile zusammengesetzt werden können und gegebenenfalls über geeignete Verbindungseinrichtungen miteinander verbunden werden. Der Kühlabschnitt ist zweckmäßigerweise einteilig bzw. einstückig mit einem Gehäuseteil ausgebildet, er kann gegebenenfalls aber auch ein separates Gehäuseteil bilden, welches mit dem anderen bzw. den anderen Gehäuseteilen zu verbinden ist.

Die erfindungsgemäße Ausführung ermöglicht es, das Servogehäuse in der fertig montierten Position mit ebenen Seitenwänden auszubilden, indem die einzelnen Gehäuseteile, welche zusammengesetzt werden, aneinander angepasste Dimensionierungen aufweisen. Grundsätzlich ist es aber auch möglich, Gehäuseteile mit unterschiedlichen Dimensionierungen einzusetzen, so dass sich in der Seitenwandung des Servogehäuses Stufen oder dergleichen ergeben.

Die Motorachse des elektrischen Servomotors schließt mit der Lenkwellenachse einen Winkel ein. Dadurch werden zusätzliche konstruktive Einbaumöglichkeiten geschaffen, wobei der Winkel zweckmäßigerweise nicht größer ist als 30°.

In Fahrzeugquerrichtung gesehen kann das Servogehäuse mit Elektromotor, Steuereinheit und Kühlabschnitt entweder mittig zur Lenkwelle oder mit seitlichem Versatz hierzu angeordnet

Bei einer winkligen Anordnung zur Lenkwellenachse ist zweckmäßigerweise ein Gehäuseteil des Servogehäuses winkelförmig ausgebildet, derart, dass sich eine Gehäusewandung des Gehäuseteils parallel zum Lenkwellengehäuse erstreckt und somit eine flächige Anbindung an das Lenkwellengehäuse möglich ist. Grundsätzlich reicht aber auch ein linienförmiger oder punktförmiger Kontakt zwischen dem Servogehäuse und dem Lenkwellengehäuse aus.

Innerhalb des Servogehäuses kommen verschiedene Positionierungen der einzelnen Baueinheiten Servomotor - Steuereinheit - Kühlabschnitt in Betracht. Als vorteilhaft hat es sich erwiesen, den Kühlabschnitt unmittelbar benachbart zur Steuereinheit und/oder zum Lenkwellengehäuse anzuordnen, wobei insbesondere der letztere Fall zu einer optimalen Wärmeableitung über das Lenkwellengehäuse führt.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines Lenksystems in einem Fahrzeug, mit einer Lenkwelle, die in einem Lenkwellengehäuse geführt ist, wobei an das Lenkwellengehäuse ein Servogehäuse angeschlossen ist, in welchem ein elektrischer Servomotor zur Bereitstellung eines unterstützenden Servomoments und eine Steuereinheit aufgenommen sind, wobei ein Gehäuseabschnitt des Servogehäuses als Kühlabschnitt ausgeführt ist,
- Fig. 2: ein Lenksystem ähnlich dem aus Fig. 1, jedoch mit vertauschter Positionierung von Servomotor und Steuereinheit,
- Fig. 3: ein Lenksystem in einer weiteren Ausführung, bei dem der Kühlabschnitt auf der dem Lenkwellengehäuse abgewandten Seite positioniert ist,
- Fig. 4: ein weiteres Lenksystem, bei dem der Servomotor und die Steuereinheit auf unterschiedlichen radialen Seiten des Lenkwellengehäuses angeordnet sind,
- Fig. 5: ein weiteres Ausführungsbeispiel, bei dem der Servomotor winklig zur Lenkwellenachse angeordnet ist,
- Fig. 6: ein weiteres Ausführungsbeispiel, bei dem der Servomotor vertikal zur Straßenoberfläche angeordnet ist,
- Fig. 7: ein weiteres Ausführungsbeispiel mit einer winkligen Positionierung des Servomotors sowohl zur Straßenoberfläche als auch zur Lenkwellenachse,
- Fig. 8: ein weiteres Ausführungsbeispiel mit einer parallelen Positionierung des Servomotors zur Lenkwellenachse, wobei die Steuereinheit axial am Gehäuse des Servomotors aufgenommen ist,
- Fig. 9: ein weiteres Ausführungsbeispiel mit paralleler Anordnung des Servomotors zur Lenkwellenachse.

In den Figuren sind gleiche Bauteile mit gleichen Bezugszeichen versehen.

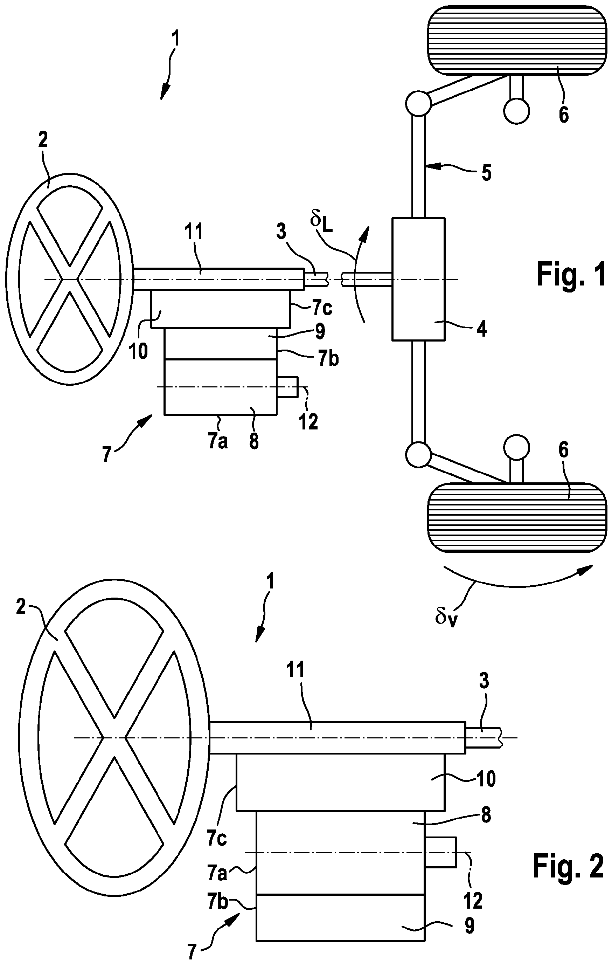

Das in Fig. 1 dargestellte Lenksystem 1 in einem Kraftfahrzeug umfasst ein Lenkrad 2, über das der Fahrer einen Lenkradwinkel δ_{L} vorgibt, eine mit dem Lenkrad 2 drehfest verbundene Lenkwelle 3, ein Lenkgetriebe 4 sowie ein Lenkgestänge 5, das die lenkbaren Vorderräder 6 mit einem Radlenkwinkel δ_{V} verstellt, der sich aus dem Übersetzungsverhältnis des mechanischen Lenkgetriebes 4 ergibt.

Das Lenksystem 1 ist als EPS-System (Electric Power Steering) ausgebildet und umfasst einen elektrischen Servomotor 8 in einem Servogehäuse 7 zur Erzeugung eines die Lenkbewegung unterstützenden Momentes, welches in die Lenkwelle 3 eingeleitet wird. Das Servogehäuse 7 befindet sich unmittelbar neben einem Lenkwellengehäuse 11, in welchem die Lenkwelle 3 drehbar aufgenommen ist, und ist insbesondere mit dem Lenkwellengehäuse 11 verbunden. Der elektrische Servomotor 8 ist in der Weise zu der Lenkwelle 3 positioniert, dass die Motorachse 12 parallel zur Achse der Lenkwelle verläuft.

Das Servogehäuse 7 beherbergt neben dem elektrischen Servomotor 8 auch die dem Servomotor zugeordnete Steuereinheit 9 sowie einen Kühlabschnitt 10, der zur Kühlung insbesondere der Steuereinheit, aber auch des Servomotors vorgesehen ist. Das Servogehäuse 7 ist mehrteilig aufgebaut und umfasst drei Gehäuseteile 7a, 7b, 7c, die separat voneinander ausgebildet sein können und den Servomotor 8, die Steuereinheit 9 sowie den Kühlabschnitt 10 umfassen. Gegebenenfalls sind aber auch zwei der drei Gehäuseteile oder alle drei Gehäuseteile einteilig bzw. einstückig ausgeführt.

Der Kühlabschnitt 10 ist identisch mit dem Gehäuseteil 7c, die Kühlung wird durch Wärmeabstrahlung bzw. Wärmeleitung in der Wandung des Gehäuseteils 7c erreicht. Das Servogehäuse 7 ist über das Gehäuseteil 7c mit dem Lenkwellengehäuse 11 verbunden. Entsprechend befindet sich der Kühlabschnitt 10 unmittelbar benachbart zum Lenkwellengehäuse 11, die Steuereinheit 9 schließt sich an den Kühlabschnitt 10 und der elektrische Servomotor 8 schließt sich an die Steuereinheit 9 an, so dass der Servomotor einen größeren Abstand zur Lenkwelle 3 aufweist als die Steuereinheit 9 und der Kühlabschnitt 10. Das Gehäuseteil 7a zur Aufnahme des Servomotors 8 sowie das Gehäuseteil 7b zur Aufnahme der Steuereinheit 9 sind im Hinblick auf die Dimensionen aneinander angepasst, so dass sich im zusammengesetzten, montierten Zustand eine glattflächige Seitenwand ergibt, die sich gemeinsam über die beiden Gehäuseteile 7a und 7b erstreckt. Das Gehäuseteil 7c mit dem Kühlabschnitt 10 ist dagegen zumindest in Achsrichtung geringfügig größer ausgebildet.

Im Ausführungsbeispiel nach Fig. 2 befindet sich der Servomotor 8 mit seinem Gehäuseteil 7a zwischen dem Kühlabschnitt 10 (Gehäuseteil 7c), der unmittelbar benachbart zum Lenkwellengehäuse 3 angeordnet ist, und der Steuereinheit 9 im Gehäuseteil 7b, das im Ausführungsbeispiel das außen liegende Bauteil bildet. Die Motorachse 12 des Servomotors 8 verläuft parallel zur Lenkwelle 3.

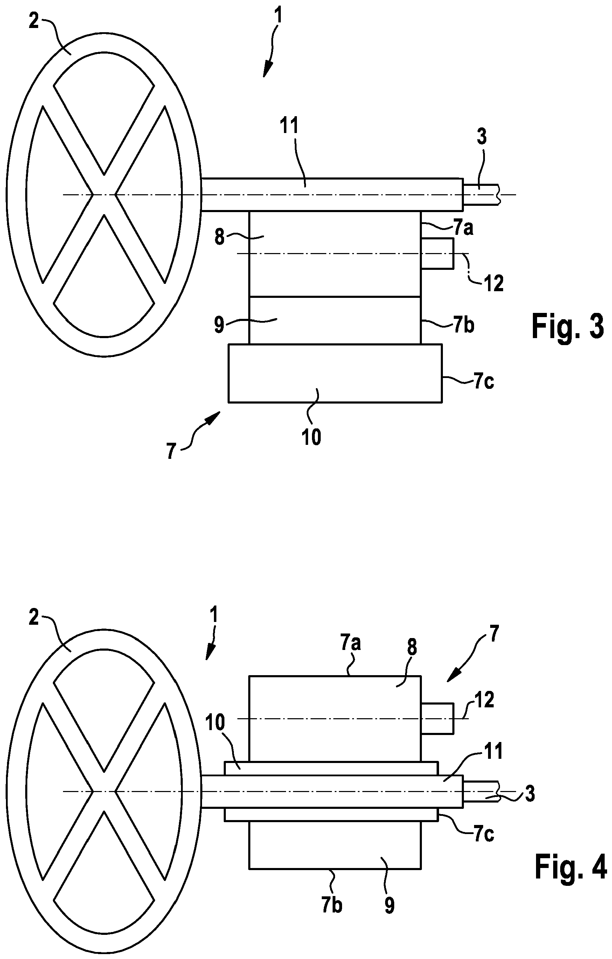

Im Ausführungsbeispiel nach Fig. 3 ist der elektrische Servomotor 8 unmittelbar benachbart zur Lenkwelle 3 angeordnet. Auf der der Lenkwelle 3 abgewandten Seite schließt sich an den Servomotor 8 die Steuereinheit 9 an, der Kühlabschnitt 10 bildet aus Sicht der Lenkwelle das außen liegende Teil im Servogehäuse 7.

Im Ausführungsbeispiel nach Fig. 4 befinden sich die Bauteile des Servogehäuses 7 auf gegenüberliegenden radialen Seiten des Lenkwellengehäuses 11, und zwar der Servomotor 8 auf der einen und die Steuereinheit 9 auf der gegenüberliegenden Seite. Der Kühlabschnitt 10 bildet die Verbindung zum Lenkgehäuse 11 und erstreckt sich zum Teil sowohl auf Seiten des Servomotors 8 als auch auf Seiten der Steuereinheit 9.

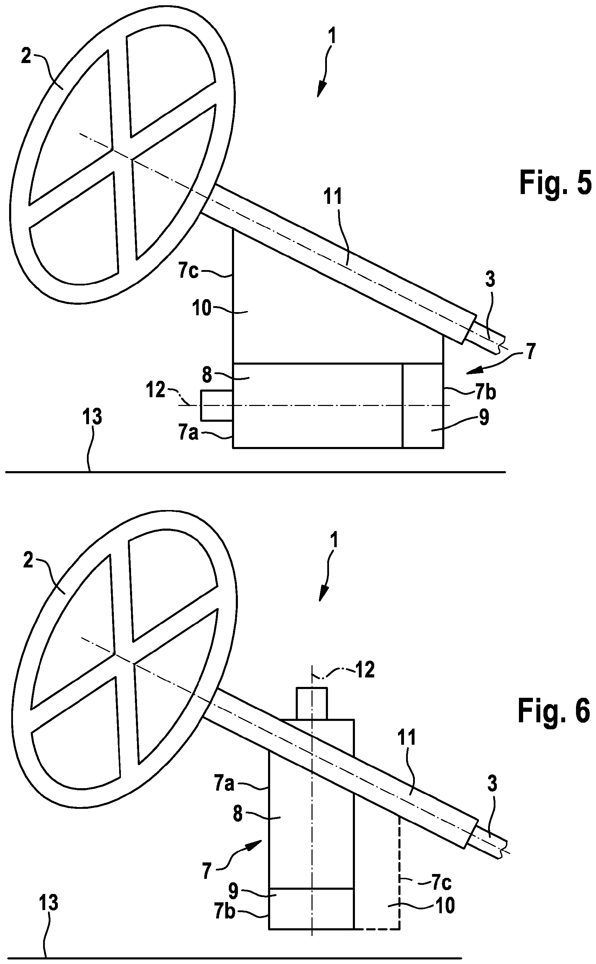

Im Ausführungsbeispiel nach Fig. 5 ist der Servomotor 8 unter einem Winkel zur Lenkwelle 3 angeordnet, so dass die Motorachse 12 mit der Achse der Lenkwelle 3 einen Winkel einschließt, der beispielsweise etwa 30° beträgt. Außerdem ist der Servomotor 8 so angeordnet, dass die Motorachse 12 in regulären Betriebspositionen des Fahrzeuges parallel zur Straßenoberfläche 13 liegt. Die Steuereinheit 9 schließt sich an die axiale Stirnseite des Servomotors 8 an. Der Kühlabschnitt 10 ist winklig ausgebildet und befindet sich zwischen dem Servomotor 8 und dem Lenkwellengehäuse 11 und stellt die Verbindung zum Lenkwellengehäuse her.

Im Ausführungsbeispiel nach Fig. 6 ist der Servomotor 8 vertikal zur Straßenoberfläche 13 ausgerichtet. Aufgrund der Schrägstellung der Lenkwelle 3 schließt die Motorachse 12 mit der Achse der Lenkwelle 3 einen Winkel ein. Die Steuereinheit 9 befindet sich an der axialen Stirnseite des Servomotors 8 auf der der Straßenoberfläche 13 zugewandten Seite. Der Kühlabschnitt 10 erstreckt sich beispielhaft parallel zum Servomotor 8 und zur Steuereinheit 9 bis zum Lenkwellengehäuse 11.

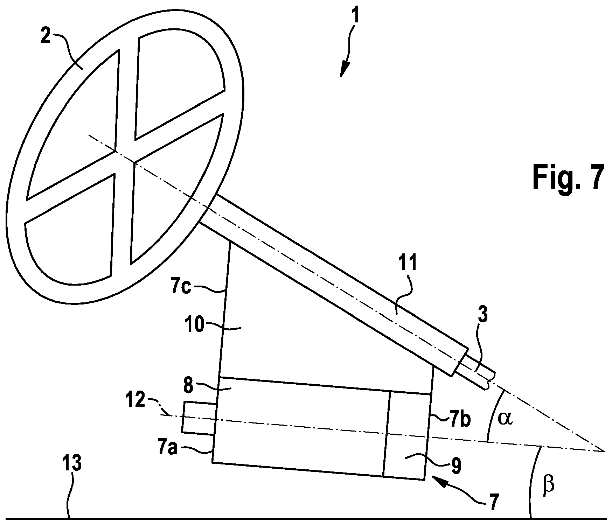

Das Ausführungsbeispiel nach Fig. 7 entspricht im Wesentlichen demjenigen nach Fig. 5, jedoch mit dem Unterschied, dass die Motorachse 12 nicht nur mit der Achse der Lenkwelle 3 einen Winkel α von etwa 20° bis 30° einschließt, sondern zusätzlich mit einem Winkel β gegenüber der Straßenoberfläche 13 geneigt ist. Der Winkel β ist vorteilhafterweise kleiner als 10°, insbesondere nicht größer als 5°.

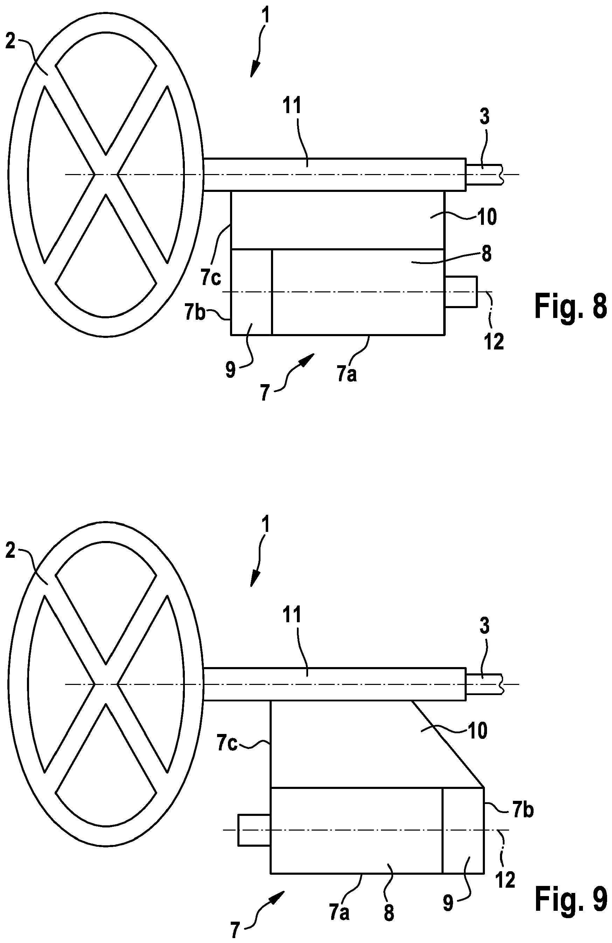

Im Ausführungsbeispiel gemäß Fig. 8 ist analog zum Ausführungsbeispiel nach Fig. 1 der elektrische Servomotor 8 parallel zur Lenkwelle 3 angeordnet. Die Steuereinheit 9 befindet sich an einer der axialen Stirnseiten des Servomotors 8. Der Kühlabschnitt 10 stellt die Verbindung zum Lenkwellengehäuse 11 dar, er befindet sich zwischen dem Servomotor 8 sowie der Steuereinheit 9 und dem Lenkwellengehäuse. Die Steuereinheit 9 ist an der dem Lenkrad 2 zugewandten Stirnseite des Servomotors 8 angeordnet.

Im Ausführungsbeispiel nach Fig. 9 ist die Achse des elektrischen Servomotors 8 ebenfalls parallel zur Lenkwelle 3 angeordnet. Die Steuereinheit 9 befindet sich an der dem Lenkrad 2 abgewandten Stirnseite des Servomotors. Der Kühlabschnitt 10 liegt zwischen Servomotor und Steuereinheit einerseits und dem Lenkwellengehäuse andererseits, im Ausführungsbeispiel nach Fig. 9 ist der Kühlabschnitt an einer Stirnseite winklig ausgeführt.

Grundsätzlich kann der Kühlabschnitt 10 als Bindeglied für zwei Gehäuseteile oder alle drei Gehäuseteile 7a, 7b und 7c dienen. Des Weiteren ist es möglich, das Lenkwellengehäuse zur Kühlung von Servomotor 8 und/oder Steuereinheit 9 heranzuziehen.

## Patentansprüche

1. Lenksystem in einem Fahrzeug, mit einer Lenkwelle (3), über die ein vom Fahrer vorgegebener Lenkradwinkel (δ_{L}) zur Einstellung eines Radlenkwinkels (δ_{V}) an den lenkbaren Rädern (6) des Fahrzeugs übertragbar ist, mit einem elektrischen Servomotor (8), der mit der Lenkwelle (3) zur Einleitung eines unterstützendes Servomoments gekoppelt ist, und mit einer dem Servomotor (8) zugeordneten Steuereinheit (9), wobei der Servomotor (8), die Steuereinheit (9) und ein zur Kühlung von Servomotor (8) bzw. Steuereinheit (9) dienender Kühlabschnitt (10) in einem Servogehäuse (7) angeordnet sind, das mit einem Lenkwellengehäuse (11) verbunden ist, in dem die Lenkwelle (3) aufgenommen ist, **dadurch gekennzeichnet, dass** die Motorachse (12) mit der Lenkwellenachse einen Winkel (α) von 20° bis 30° einschließt und die Motorachse (12) zusätzlich mit einem Winkel (β) kleiner als 10° gegenüber der Straßenoberfläche (13) geneigt ist, dass die Steuereinheit (9) sich an die axiale Stirnseite des Servomotors (8) anschließt und dass der unmittelbar benachbart zum Lenkwellengehäuse (11) angeordnete Kühlabschnitt (10) winklig ausgebildet und sich zwischen dem Servomotor (8) und dem Lenkwellengehäuse (11) befindet und die Verbindung zum Lenkwellengehäuse (11) herstellt.

2. Lenksystem nach Anspruch 1,
**dadurch gekennzeichnet, dass** die Steuereinheit (9) radial am Servomotor (8) angeordnet ist.

3. Lenksystem nach Anspruch 1,
**dadurch gekennzeichnet, dass** die Steuereinheit (9) axial am Servomotor (8) angeordnet ist.

4. Lenksystem nach einem der Ansprüche 1 bis 3,
**dadurch gekennzeichnet, dass** das Servogehäuse (7) mindestens zweiteilig aufgebaut ist, wobei die Gehäuseteile (7a, 7b, 7c) in montierter Position zu einem gemeinsamen Gehäuse zusammengesetzt sind.

5. Lenksystem nach Anspruch 4,
**dadurch gekennzeichnet, dass** der Kühlabschnitt (10) als Bindeglied für die Gehäuseteile (7a, 7b, 7c) dient.

6. Lenksystem nach einem der Ansprüche 1 bis 5,
**dadurch gekennzeichnet, dass** das Lenkwellengehäuse (11) zur Kühlung von Servomotor (8) bzw. Steuereinheit (9) verwendet wird.

7. Lenksystem nach einem der Ansprüche 1 bis 6,
**dadurch gekennzeichnet, dass** ein Gehäuseteil (7a, 7b, 7c) des Servogehäuses winkelförmig ausgebildet ist, so dass sich eine Gehäusewandung parallel zum Lenkwellengehäuse (11) erstreckt.

8. Lenksystem nach einem der Ansprüche 1 bis 7,
**dadurch gekennzeichnet, dass** der Kühlabschnitt (10) unmittelbar benachbart zur Steuereinheit (9) angeordnet ist.

9. Lenksystem nach einem der Ansprüche 1 bis 8,
**dadurch gekennzeichnet, dass** der Kühlabschnitt (10) als eine Gehäusewandung des Servogehäuses (7) ausgeführt ist.

10. Lenksystem nach einem der Ansprüche 1 bis 9,
**dadurch gekennzeichnet, dass** das Servogehäuse (7) in montierter Position ebene Seitenwände aufweist.

## Claims

1. Steering system in a vehicle, having a steering shaft (3) by means of which a steering-wheel angle (δ_{L}) predefined by the driver can be transmitted in order to set a wheel steering angle (δ_{V}) at the steerable wheels (6) of the vehicle, having an electric servo motor (8) which is coupled to the steering shaft (3) for the purposes of introducing an assisting servo torque, and having a control unit (9) which is assigned to the servo motor (8), wherein the servo motor (8), the control unit (9) and a cooling section (10) which serves for cooling servo motor (8) and/or control unit (9) are arranged in a servo housing (7) which is connected to a steering shaft housing (11) in which the steering shaft (3) is accommodated, **characterized in that** the motor axis (12) encloses an angle (α) of 20° to 30° with the steering shaft axis and the motor axis (12) is additionally inclined at an angle (β) of less than 10° relative to the road surface (13), **in that** the control unit (9) adjoins the axial face side of the servo motor (8), and **in that** the cooling section (10), which is arranged directly adjacent to the steering shaft housing (11), is of angled form and is situated between the servo motor (8) and the steering shaft housing (11) and produces the connection to the steering shaft housing (11).

2. Steering system according to Claim 1, **characterized in that** the control unit (9) is arranged radially on the servo motor (8).

3. Steering system according to Claim 1, **characterized in that** the control unit (9) is arranged axially on the servo motor (8).

4. Steering system according to one of Claims 1 to 3, **characterized in that** the servo housing (7) is of at least two-part construction, wherein the housing parts (7a, 7b, 7c) are, in an installed position, assembled to form a common housing.

5. Steering system according to Claim 4, **characterized in that** the cooling section (10) serves as a joining element for the housing parts (7a, 7b, 7c).

6. Steering system according to one of Claims 1 to 5, **characterized in that** the steering shaft housing (11) is used for cooling servo motor (8) and/or control unit (9).

7. Steering system according to one of Claims 1 to 6, **characterized in that** one housing part (7a, 7b, 7c) of the servo housing is of angled form, such that one housing wall extends parallel to the steering shaft housing (11).

8. Steering system according to one of Claims 1 to 7, **characterized in that** the cooling section (10) is arranged directly adjacent to the control unit (9).

9. Steering system according to one of Claims 1 to 8, **characterized in that** the cooling section (10) is formed as a housing wall of the servo housing (7).

10. Steering system according to one of Claims 1 to 9, **characterized in that** the servo housing (7), in an installed position, has planar side walls.

## Revendications

1. Système de braquage pour véhicule, présentant
un arbre de direction (3) par lequel un angle (δ_{L}) de volant prédéterminé peut être transmis par le conducteur aux roues directrices (6) du véhicule en vue d'établir un angle de roue (δᵥ),
un servomoteur électrique (8) qui est accouplé à l'arbre de direction (3) pour appliquer un servo-couple de soutien et
une unité de commande (9) associée au servomoteur (8),
le servomoteur (8), l'unité de commande (9) et une section de refroidissement (10) servant à refroidir le servomoteur (8) ou l'unité de commande (9) étant disposée dans un servo-boîtier (7) relié à un boîtier (11) d'arbre de direction dans lequel l'arbre de direction (3) est repris,
**caractérisé en ce que**
l'axe (12) du moteur forme avec l'axe de l'arbre de direction un angle (α) de 20° à 30° et l'axe (12) du moteur est de plus incliné d'un angle (β) inférieur à 10° par rapport à la surface (13) de la chaussée,
**en ce que** l'unité de commande (9) se raccorde au côté frontal axial du servomoteur (8) et
**en ce que** la section de refroidissement (10) disposée directement au voisinage du boîtier (11) de l'arbre de direction a une configuration coudée, se situe entre le servomoteur (8) et le boîtier (11) de l'arbre de direction et assure la liaison avec le boîtier (11) de l'arbre de direction.

2. Système de braquage selon la revendication 1, **caractérisé en ce que** l'unité de commande (9) est disposée radialement sur le servomoteur (8).

3. Système de braquage selon la revendication 1, en ce que l'unité de commande (9) est disposée axialement sur le servomoteur (8).

4. Système de braquage selon l'une des revendications 1 à 3, **caractérisé en ce que** le servo-boîtier (7) est réalisé en au moins deux parties, les parties (7a, 7b, 7c) du boîtier étant assemblées en un boîtier commun en position montée.

5. Système de braquage selon la revendication 4, **caractérisé en ce que** la section de refroidissement (10) sert d'organe de liaison pour les parties (7a, 7b, 7c) du boîtier.

6. Système de braquage selon l'une des revendications 1 à 5, **caractérisé en ce que** le boîtier (11) de l'arbre de direction est utilisé pour refroidir le servomoteur (8) ou l'unité de commande (9).

7. Système de braquage selon l'une des revendications 1 à 6, **caractérisé en ce qu'**une partie (7a, 7b, 7c) du servo-boîtier a une configuration coudée de telle sorte qu'une paroi du boîtier s'étend parallèlement au boîtier (11) de l'arbre de direction.

8. Système de braquage selon l'une des revendications 1 à 7, **caractérisé en ce que** la section de refroidissement (10) est disposée au voisinage direct de l'unité de commande (9).

9. Système de braquage selon l'une des revendications 1 à 8, **caractérisé en ce que** la section de refroidissement (10) est réalisée sous la forme d'une paroi du servo-boîtier (7).

10. Système de braquage selon l'une des revendications 1 à 9, **caractérisé en ce que** le servo-boîtier (7) présente des parois latérales planes en position montée.
